# FASCICULE DE BREVET EUROPEEN

(11) **EP 0 917 101 B1**
(45) Date de publication et mention de la délivrance du brevet: **12.05.2004**
(21) Numéro de dépôt: 98121546.0
(22) Date de dépôt: 17.11.1998
(51) Int. Cl.: G06K 19/077

(54) **Bobine d'antenne à champ électrique réduit**
Antennenspule mit reduziertem elektrischem Feld
Antenna coil with reduced electric field

(30) Priorité: 18.11.1997 FR 9714684
(43) Date de publication de la demande: 19.05.1999
(73) Titulaire: STMicroelectronics S.A., 92120 Montrouge (FR)
(72) Inventeur: Enguent, Jean-Pierre, 13119 Saint Savournin (FR)
(74) Mandataire: Bentz, Jean-Paul

(56) Documents cités:
- DE-A- 19 542 900
- US-A- 4 451 812
- US-A- 5 598 327

## Description

La présente invention concerne une station d'émission-réception de données par couplage inductif.

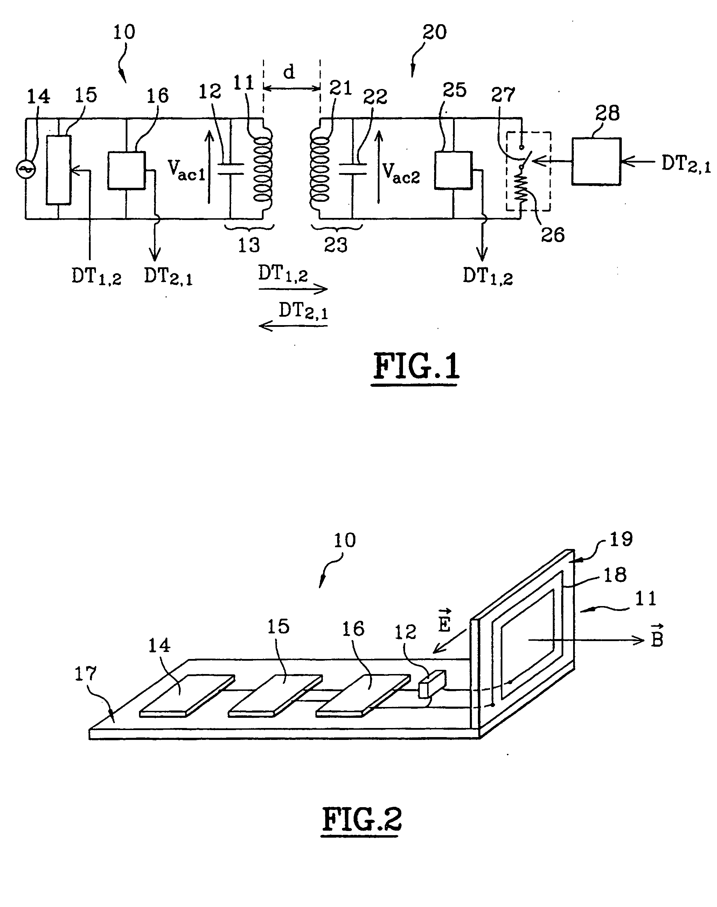

A titre de rappel, la figure 1 représente un système classique de transmission de données par couplage inductif. Le système comprend une station d'émission-réception 10 et un module passif 20 du type transpondeur, par exemple le circuit intégré d'une carte à puce sans contact. La station 10 comprend une bobine d'antenne 11 formant avec une capacité 12 un circuit résonant 13 excité par une tension alternative Vac1 émise par un générateur 14. En regard de la station 10, le module 20 comprend une bobine de réception 21 formant avec une capacité 22 un circuit résonant 23 accordé au circuit résonant 13 de la station 10.

Pour la transmission de données numériques DT_{1,2} de la station 10 vers le module 20, la tension Vac1 est modulée en amplitude par un circuit codeur-modulateur 15 recevant en entrée les données DT_{1,2} à émettre. Par couplage inductif entre les bobines 11 et 21, le module 20 reçoit une tension induite Vac2 qui est l'image de la tension Vac1 et présente des maxima et des minima d'amplitude. La démodulation de la tension Vac2 est assurée par un circuit démodulateur-décodeur 25 qui délivre les données DT_{1,2}.

La transmission de données DT_{2,1} dans le sens opposé, c'est-à-dire du module 20 vers la station 10 repose sur une méthode sensiblement différente dite de modulation de charge. Cette méthode consiste à moduler l'impédance de la bobine 21, par exemple au moyen d'une résistance 26 commutée par un interrupteur 27. L'interrupteur 27 est fermé et ouvert alternativement par un circuit codeur 28 recevant en entrée les données DT_{2,1} à émettre. La variation de l'impédance de la bobine 21 se répercute par couplage inductif sur la bobine 11 de la station 10 et provoque dans celle-ci une modulation du courant ou de la tension d'excitation Vacl. Un circuit détecteur-décodeur 16 comprenant par exemple des moyens de mesure du courant ou de la tension d'excitation Vac1 perçoit les ouvertures et fermetures de l'interrupteur 27 et en déduit les données DT_{2,1} envoyées par le module 20.

Les divers circuits mentionnés ci-dessus sont bien connus de l'homme de l'art et ne seront pas décrits en détail. On va s'intéresser maintenant à la réalisation pratique d'un tel système, et plus particulièrement la réalisation de la station 10. Dans la pratique, on souhaite en effet réaliser la station 10 sous une forme très compacte et dans un volume minimal. La solution qui s'impose, illustrée par la figure 2, est d'agencer les divers circuits 14 à 16 et la capacité 12 sur un support d'interconnexion commun, par exemple une carte à circuit imprimé 17. La bobine d'antenne 11 est également réalisée sous forme compacte et prend la forme d'un enroulement plat 18 agencé sur un support isolant 19 fixé au circuit imprimé 17, par exemple dans une position perpendiculaire.

Bien que cette forme de réalisation de la station 10 soit satisfaisante en termes d'encombrement, la demanderesse s'est aperçue que l'agencement de la bobine 11 à proximité des circuits électroniques perturbe de façon sensible le fonctionnement de la station. La cause de cette perturbation est un champ électrique parasite E émis par la bobine 11 conjointement au champ magnétique utile B (voir figure 2), qui génère des tensions parasites de quelques microvolts dans les conducteurs. En particulier, le champ électrique E dégrade le rapport signal/bruit en mode réception et perturbe la détection des modulations de charge très faibles quand la distance d (figure 1) séparant la station 10 du module 20 est importante et le couplage inductif entre les bobines 11,21 très faible.

Une solution pour pallier cet inconvénient consiste à disposer le circuit imprimé 17 dans un coffret métallique blindé, la bobine 11 étant agencée à l'extérieur du coffret. Toutefois, cette solution présente l'inconvénient d'être coûteuse. De plus, cette solution conduit à une augmentation du volume de la station 10, la bobine 11 devant être éloignée du coffret pour que le flux magnétique B puisse circuler librement sans être perturbé par les parois du coffret.

Le document DE-A-195 42 900 décrit un support de données sans contact présentant une antenne en forme de bobine pour la réception et l'émission de données. Une bobine supplémentaire est placée dans un plan parallèle à la bobine d'antenne. Le couplage de la bobine supplémentaire à la bobine d'antenne est modifié par l'état d'un interrupteur joignant deux extrémités de la bobine supplémentaire. Le contact entre les extrémités est maintenu ouvert pour accroître la portée de la bobine d'antenne.

Le document US-A-5 598 327 décrit un transformateur plan. Ce transformateur plan comprend des premier et deuxième enroulements ne se superposant pas et concentriques. Un des enroulements est disposé entre des éléments conducteurs connectés ensembles. Chaque élément conducteur présente un espace séparant deux de ses extrémités.

Ainsi, l'objectif de la présente invention est de prévoir une bobine à faible émission de champ électrique.

Cet objectif est atteint par la prévision d'une station d'émission-réception de données par couplage inductif adaptée pour interroger un module passif, la station comprenant une bobine formant bobine d'antenne, la bobine comprenant un enroulement plat de forme déterminée et la station comprenant un écran conducteur agencé en regard de l'enroulement, l'écran conducteur étant sensiblement de même forme que l'enroulement et comportant une zone de coupure pour former un circuit en boucle ouverte.

Par exemple, l'enroulement de la bobine et l'écran peuvent être rectangulaires, annulaires, etc..

Selon un mode de réalisation, l'enroulement est agencé sur une face d'une plaquette isolante, l'écran étant agencé sur l'autre face ou dans l'épaisseur de la plaquette isolante.

Selon un mode de réalisation, l'enroulement est agencé sur l'écran avec interposition d'un matériau électriquement isolant.

Selon un mode de réalisation, l'enroulement est directement agencé sur l'écran.

En pratique, l'enroulement peut être réalisé à partir d'une piste conductrice ou d'un fil électrique.

Ces caractéristiques et les avantages de la présente invention seront exposés plus en détail dans la description suivante de divers modes de réalisation d'une bobine selon l'invention, en relation avec les figures jointes parmi lesquelles :
- la figure 1 précédemment décrite est le schéma électrique d'un système de transmission de données par couplage inductif comprenant une station et un module transpondeur,
- la figure 2 précédemment décrite illustre un exemple de réalisation sous une forme compacte de la station de la figure 1,
- les figures 3A et 3B représentent respectivement la face avant et la face arrière d'une bobine d'une station selon l'invention, et
- les figurent 4 à 7 sont des vues en coupe de variantes de réalisation d'une bobine d'une station selon l'invention.

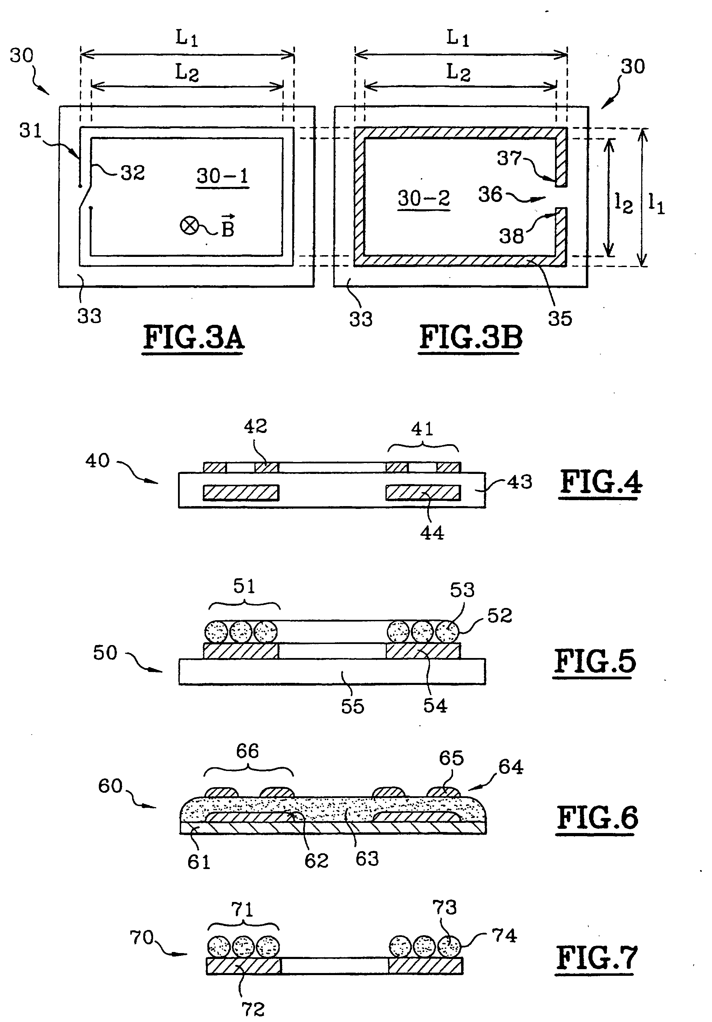

Les figures 3A et 3B représentent respectivement la face avant 30-1 et la face arrière 30-2 d'une bobine 30 d'une station selon l'invention. Vue de sa face avant 30-1, la bobine 30 comprend de façon classique un enroulement plat 31 formé par une piste métallique 32 en spirale agencée sur une plaquette isolante 33. L'enroulement 31 comprend ici deux spires et a la forme d'un cadre de dimensions extérieures L1 et l1 et de dimensions intérieures L2 et l2.

Selon l'invention, la face arrière 30-2 de la bobine 30 comprend un écran métallique 35 solidaire de la plaquette 33. L'écran 35 est de même forme que l'enroulement 31 et son emplacement sur la face arrière 30-2 coïncide avec l'emplacement de l'enroulement 31 sur la face avant 30-1. Ainsi, l'écran 35 revêt ici la forme d'un cadre de dimensions extérieures L1, l1 et de dimensions intérieures L2, l2. L'écran 35 comporte par ailleurs une zone de coupure 36 et forme ainsi un circuit conducteur en boucle ouverte comportant deux extrémités 37, 38 ne se rejoignant pas.

Des études conduites par la demanderesse ont montré qu'une telle bobine 30 équipée d'un tel écran 35 présente l'avantage d'émettre un champ électrique faible, diminué de 70 à 80% relativement à une bobine classique de même structure. Ainsi, l'écran 35 selon l'invention neutralise le champ électrique parasite émis par l'enroulement 31 sans perturber le champ magnétique utile B, orienté axialement (soit perpendiculairement au plan de la feuille). Une caractéristique importante pour l'obtention de ce résultat est la zone de coupure 36 sans laquelle l'écran 35 formerait un circuit en boucle fermé qui court-circuiterait le champ magnétique B. La taille et la forme de l'écran sont également des paramètres importants. Par exemple, l'augmentation de la taille de l'écran 35 au-delà des limites données par la forme de l'enroulement 31 perturberait le champ magnétique B et modifierait l'inductance L de la bobine 30.

Bien entendu, la bobine 30 est susceptible de nombreuses variantes de réalisation, notamment en ce qui concerne la forme de l'enroulement 31 et le nombre de spires qu'il comporte. Par exemple, l'enroulement 31 et l'écran 35 pourraient être de forme annulaire.

Egalement, la bobine selon l'invention est susceptible de diverses variantes selon la technologie de fabrication retenue. Sur les figures 3A, 3B l'enroulement 31 et l'écran 35 sont métalliques et réalisés selon la technologie des circuits imprimés, par exemple par gravure chimique d'une plaquette double face en cuivre/époxy/cuivre. Toutefois, de nombreux autres modes de réalisation peuvent être prévus, comme illustré par les vues en coupe des figures 4 à 6. Dans un souci de lisibilité de ces figures, les épaisseurs des bobines représentées ne sont pas à l'échelle et sont sensiblement dilatées.

Sur la figure 4, on voit une bobine 40 susceptible d'être réalisée selon la technologie des circuits imprimés multicouches. Comme précédemment, cette bobine 40 comporte un enroulement 41 formé par une piste métallique 42 agencée à la surface d'une plaquette isolante 43, et un écran métallique 44 selon l'invention. Ici, l'écran 44 n'est pas agencé au dos de la plaquette 43 mais dans son épaisseur.

Sur la figure 5, on voit une bobine 50 dont l'enroulement 51 est formé par un fil électrique 52 pourvu d'une gaine isolante 53. L'enroulement 51 est agencé directement sur un écran 54 selon l'invention, lui-même solidaire d'une plaquette isolante 55. L'écran 54 est par exemple réalisé par gravure chimique et le fil électrique 52 fixé sur l'écran 54 par collage.

La figure 6 représente une bobine 60 pouvant être réalisée selon la technologie des circuits dits à "couches épaisses" ("thick films"), c'est-à-dire par sérigraphie d'encres conductrices et d'encres isolantes, ou encore selon la technologie des circuits dits à "couches minces" ("thin films"), c'est-à-dire par dépôt sous vide de matières conductrices et de matières isolantes. La bobine 60 comprend ainsi un substrat 61, par exemple en alumine AL₂O₃, sur lequel sont empilées une première couche conductrice 62 en forme d'écran selon l'invention, une couche d'un matériau diélectrique 63 et une. deuxième couche conductrice 64. La deuxième couche conductrice 64 est déposée selon un motif de piste conductrice 65 en spirale et forme l'enroulement 66 de la bobine 60.

Enfin, la figure 7 représente une bobine 70 comprenant simplement un enroulement 71 agencé sur une plaque métallique 72, découpée à la forme de l'enroulement 71 pour former un écran selon l'invention. Dans ce mode de réalisation, l'enroulement 71 est réalisé au moyen d'un fil électrique 73 pourvu d'une gaine isolante 74.

En pratique, une bobine telle que décrite est utilisée comme bobine d'antenne d'une station d'émission-réception fonctionnant par couplage inductif, par exemple la station 10 de la figure 2. Grâce à son faible rayonnement électrique, la bobine ne perturbe pas les circuits les plus sensibles de la station 10 et permet notamment l'obtention d'un bon rapport signal/bruit en mode réception (détection des modulations de charge).

## Revendications

1. Station (10) d'émission-réception de données par couplage inductif adaptée pour interroger un module passif (20), la station comprenant une bobine (30, 40, 50, 60, 70) formant bobine d'antenne (11), la bobine comprenant un enroulement plat (31, 41, 51, 66, 71) de forme déterminée, **caractérisée en ce que** la station comprend un écran conducteur (35, 44, 54, 62, 72) agencé en regard de l'enroulement, ledit écran conducteur étant sensiblement de même forme que l'enroulement et comportant une zone de coupure (36) pour former un circuit en boucle ouverte.

2. Station (10) selon la revendication 1, dans laquelle l'enroulement et l'écran sont de forme rectangulaire.

3. Station (10) selon la revendication 1, dans laquelle l'enroulement et l'écran sont de forme annulaire.

4. Station (10) selon l'une des revendications précédentes, dans laquelle l'enroulement (31, 41, 66) est agencé sur une face d'une plaquette isolante (33, 43, 61, 63), l'écran (35, 44, 62) étant agencé sur l'autre face ou dans l'épaisseur de la plaquette isolante.

5. Station (10) selon l'une des revendications 1 à 3, dans laquelle l'enroulement (66) est agencé sur l'écran (62) avec interposition d'un matériau électriquement isolant (63).

6. Station (10) selon l'une des revendications 1 à 3, dans laquelle l'enroulement (51, 71) est directement agencé sur l'écran (54, 72).

7. Station (10) selon l'une des revendications précédentes, dans laquelle l'enroulement (31, 41, 66) est réalisé à partir d'une piste conductrice (32, 42, 65).

8. Station selon l'une des revendications 1 à 7, dans laquelle l'enroulement (51, 71) est réalisé à partir d'un fil électrique (52, 73).

## Claims

1. Station (10) for sending/receiving data by inductive coupling, which station is adapted for interrogating a passive module (20), the station comprising a coil (30, 40, 50, 60, 70) forming an antenna coil (11), the coil comprising a flat winding (31, 41, 51, 66, 71) of specified shape, **characterized in that** the station comprises a conducting screen (35, 44, 54, 62, 72) disposed facing the winding, the said conducting screen being substantially of the same shape as the winding and comprising a cutout zone (36) to form an open-loop circuit.

2. Station (10) according to Claim 1, in which the winding and the screen are of rectangular shape.

3. Station (10) according to Claim 1, in which the winding and the screen are of annular shape.

4. Station (10) according to one of the preceding claims, in which the winding (31, 41, 66) is disposed on a face of an insulating board (33, 43, 61, 63), the screen (35, 44, 62) being disposed on the other face or in the thickness of the insulating board.

5. Station (10) according to one of Claims 1 to 3, in which the winding (66) is disposed on the screen (62) with interposition of an electrically insulating material (63).

6. Station (10) according to one of Claims 1 to 3, in which the winding (51, 71) is disposed directly on the screen (54, 72).

7. Station (10) according to one of the preceding claims, in which the winding (31, 41, 66) is made from a conducting track (32, 42, 65).

8. Station according to one of Claims 1 to 7, in which the winding (51, 71) is made from an electric wire (52, 73).

## Patentansprüche

1. Station (10) zum Senden/Empfangen von Daten mittels induktiver Kopplung, die so ausgebildet ist, daß sie ein passives Modul (20) abfragen kann, wobei die Station eine Spule (30, 40, 50, 60, 70) aufweist, die eine Antennenspule (11) bildet, wobei die Spule eine flache Wicklung (31, 41, 51, 66, 71) von bestimmter Form aufweist, **dadurch gekennzeichnet, daß** die Station eine leitfähige Abschirmung (35, 44, 54, 62, 72) aufweist, die in einer Beziehung zur Wicklung angeordnet ist, wobei die Abschirmung im Wesentlichen die gleiche Form hat wie die Wicklung und eine Unterbrechungszone (36) aufweist, um einen Schaltkreis mit offener Schleife zu bilden.

2. Station (10) nach Anspruch 1, in welcher die Wicklung und die Abschirmung eine rechtwinklige Form haben.

3. Station (10) nach Anspruch 1, in welcher die Wicklung und die Abschirmung eine kreisförmige Form haben.

4. Station (10) nach einem der vorstehenden Ansprüche, in welcher die Wicklung (31, 41, 66) auf einer Fläche einer Isolierplatte (33, 43, 61, 63) angeordnet ist, wobei die Abschirmung (35, 44, 62) auf der anderen Fläche oder in der Dicke der Isolierplatte angeordnet ist.

5. Station (10) nach einem der Ansprüche 1 bis 3, in welcher die Wicklung (66) über der Abschirmung (62) unter Zwischenanordnung eines elektrisch isolierenden Materials (63) angeordnet ist.

6. Station (10) nach einem der Ansprüche 1 bis 3, in welcher die Wicklung (51,71) direkt auf der Abschirmung (54, 72) angeordnet ist.

7. Station (10) nach einem der vorstehenden Ansprüche, in welcher die Wicklung (31, 41, 66) aus einer Leiterbahn (32, 42, 65) ausgebildet ist.

8. Station nach einem der Ansprüche 1 bis 7, in welcher die Wicklung (51, 71) aus einer Drahtlitze (52, 73) ausgebildet ist.
